# EUROPEAN PATENT APPLICATION

(11) **EP 2 505 346 A1**
(43) Date of publication of application: **03.10.2012**
(21) Application number: 10833164.6
(22) Date of filing: 22.11.2010
(51) Int. Cl.: B30B 11/18, B01D 29/44, B01J 2/22

(54) **CHEEK PLATE EQUIPPED WITH WEDGE WIRE SCREEN**

(30) Priority: 27.11.2009 JP 2009270614
(71) Applicant: Mitsui Engineering & Shipbuilding Co., Ltd., Chuo-ku Tokyo 104-8439 (JP)
(72) Inventor: KOUNOSU, Makoto, Tokyo 104-8439 (JP)
(74) Representative: WSL Patentanwälte Partnerschaftsgesellschaft
(86) International application number: PCT/JP2010/070770
(87) International publication number: WO 2011/065318

(57) **Abstract**

Disclosed is a cheek plate which has high-efficiency, stable liquid draining performance, and achieves optimum draining performance with respect to raw material. The cheek plate(1) is provided at the front or rear of a pair of press rolls(32a, 32b) which are disposed laterally. Furthermore, a liquid drain port (14) is provided in such a way as to face a raw material catching section (33) for the press rolls (32a, 32b). The inlet side of the liquid drain port (14) is provided with a wedge wire screen (2) in such a way that liquid passage slots (22) thereof are disposed vertically or laterally.

## Description

### TECHNICAL FIELD

The present invention relates to a cheek plate equipped with a wedge wire screen to be applied, for example, to a granulator (briquette machine) configured to granulate a material containing a liquid such as water or a binder into pellets, or to a compactor configured to compress and shape the material into plates.

### BACKGROUND ART

As a briquette machine configured to granulate a material containing moisture, for example, gas hydrate into pellets, a briquette machine is heretofore known in which: a material supply hopper is provided above paired left and right pressure rollers; cheek plates are provided to extend from both front and rear edges of the material supply hopper to both front and rear edges of the paired left and right pressure rollers, respectively; a vent hole is provided in one of the two cheek plates or one of the cheek plates is formed with a porous body; and the vent hole or porous body cheek plate is coupled to a vacuum source through a hose adapter and a hose (see Patent Document 1, for example).

However, in the case of the vent hole method, it is difficult to select a pore size optimum for a vent plug to be mounted in the vent hole. Meanwhile, in the case of the porous body cheek plate method, it is difficult to select a cheek plate with a pore size optimum for a material, or to solve clogging.

Various tests were conducted under high pressure environment or under atmospheric pressure environment along with granulation of gas hydrate into pellets, but they were unsuccessful.

### PRIOR ART DOCUMENT

### PATENT DOCUMENT

Patent Document 1: Japanese patent application *Kokai* publication No. Hei 8-57698

### SUMMARY OF THE INVENTION

### PROBLEM TO BE SOLVED BY THE INVENTION

The present invention has been made to solve the above problems. An object of the present invention is to provide a cheek plate equipped with a wedge wire screen, which has efficient and stable drainage performance and is capable of achieving optimum drainage performance for a material.

### MEANS FOR SOLVING THE PROBLEM

The present invention is a cheek plate which is provided in any of front and rear of paired left and right pressure rollers and provided with a drain outlet facing a material introducing portion of the pressure rollers. The present invention is characterized in that a wedge wire screen is provided on an inlet side of the drain outlet in such a way that a liquid passing slot of the wedge wire screen extends vertically or horizontally.

The present invention is characterized in that a wedge wire screen which has a liquid passing slot extending vertically or horizontally and which is curved in such a way as to be convex on a back side thereof is provided on the inlet side of the drain outlet.

### EFFECTS OF THE INVENTION

According to the present invention, even when a material containing a large amount of liquid such as water or a binder is granulated into pellets or compressed and shaped into plates under high pressure environment or under atmospheric pressure environment, it is possible to smoothly remove the liquid such as water or a binder without clogging. In the case in which gas hydrate slurry containing a large amount of water is shaped into pellets, for example, continuous and smooth drainage is possible. This allows the stable and continuous shaping of gas hydrate slurry with a high percentage of moisture content (with a moisture content of about 70% by weight) into pellets, which had been difficult to achieve.

### BRIEF DESCRIPTION OF THE DRAWINGS

[Fig. 1] Fig. 1 is a front view of a cheek plate equipped with a wedge wire screen according to the present invention.
[Fig. 2] Fig. 2 is a cross-sectional view taken along the line A-A of Fig. 1.
[Fig. 3] Fig. 3 is a front view partially including a cross section of a gas hydrate pellet manufacturing apparatus employing the cheek plate equipped with the wedge wire screen according to the present invention.
[Fig. 4] Fig. 4 is a cross-sectional view taken along the line B-B of Fig. 3.
[Fig. 5] Fig. 5 is a front view partially including a cross section of a compactor employing the cheek plate equipped with the wedge wire screen according to the present invention.

### MODES FOR CARRYING OUT THE INVENTION

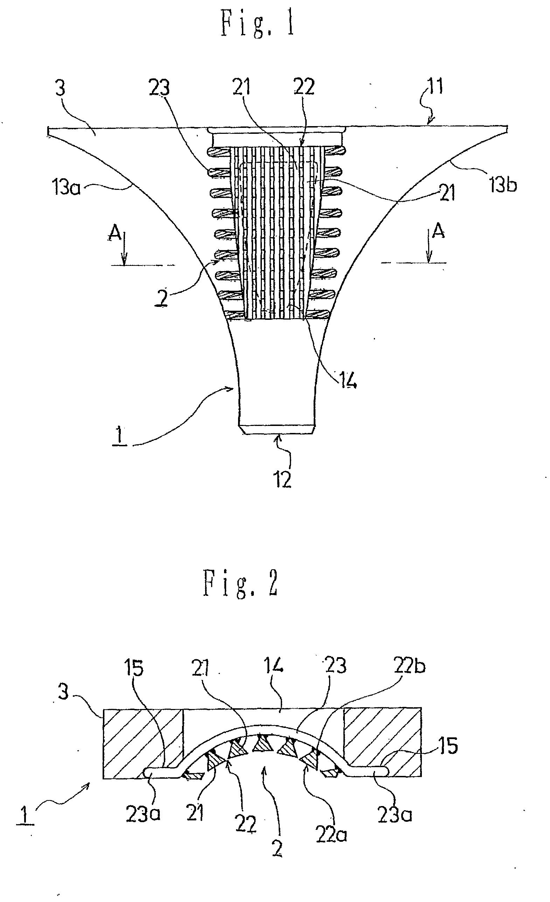

As shown in Fig. 1, a cheek plate 1 with a wedge wire screen 2 of the present invention includes the wedge wire screen 2 and a cheek plate 3. The cheek plate 3 has an upper side 11 which is larger than and extends in parallel with a lower side 12. Both left and right sides 13a, 13b of the cheek plate 3 are concave in a curved shape. Moreover, the cheek plate 3 has a drain outlet 14 in a substantial U-shape at a substantial center thereof.

As shown in Figs. 1 and 2, the wedge wire screen 2 is formed by arranging metallic linear bodies 21 with a triangular cross section at constant intervals. A liquid passing slot 22 provided between each adjacent two liner bodies 21, 21 extends vertically. Moreover, the back surfaces of the respective linear bodies 21 are fixed to multiple bar-shaped or linear supports 23 which are arranged to be orthogonal to the linear bodies 21. As shown in Fig. 2, each linear body 21 with a triangular cross section has a planar surface 22a facing forward (a side where a material containing a liquid such as water or a binder is present) and a V-shaped peak portion 22b located behind the surface 22a. The peak portion 22b is fixedly attached to the metallic supports 23.

Further, the wedge wire screen 2 is formed in a reverse trapezoidal shape having a smaller width toward its lower end, and is formed to have an arcuate cross section as shown in Fig. 2. In other words, the wedge wire screen 2 is curved in such a way as to be convex on the back surface (a side where a liquid such as water or a binder is drained) thereof.

Note that, the width of the liquid passing slot 22 (the gap between two adjacent linear bodies 21, 21) determining drainage performance is uniform throughout the length of the cheek plate. The wedge wire screen 2 is mounted on the front surface of the cheek plate 3 in such a way as to cover the drain outlet 14. Here, both end portions 23a of each support 23 of the wedge wire screen 2 are respectively fixed in side grooves 15 provided in the cheek plate 3.

An optimum dimension is selected as the width of the liquid passing slot 22 according to a material such as gas hydrate, pulverized coal, coke breeze, converter dust, metal abrasive powder, organic dry substance, or nickel ore powder.

Next, a description will be given of a case where the cheek plate 1 with the wedge wire screen 2 is applied to a gas hydrate pellet manufacturing apparatus 30.

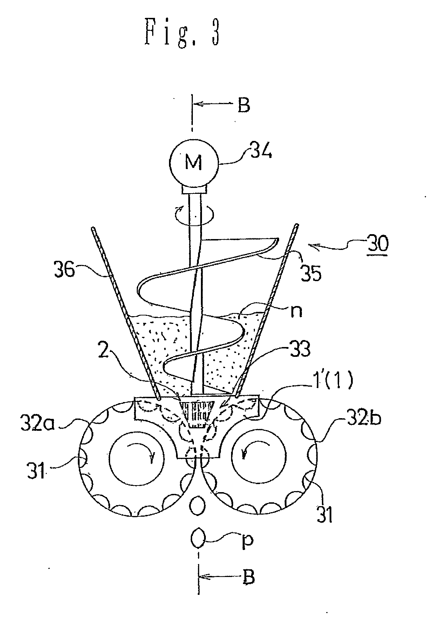

As shown in Fig. 3, the gas hydrate pellet manufacturing apparatus 30 has a configuration in which paired pressure rollers 32a, 32b each having multiple dimples (molds for pellet shaping) 31 formed in its circumferential surface are arranged horizontally, and are rotated by a driving device not shown in directions indicated by arrows, respectively.

A material supply hopper 36 including a screw feeder 35 driven by an electric motor 34 is disposed above an introducing portion 33 of the paired left and right pressure rollers 32a, 32b. The material supply hopper 36 is formed in a truncated square pyramid shape or a truncated circular cone shape having a smaller cross section toward its lower end. The cheek plate 1 with the wedge wire screen 2 described above and a cheek plate 1' with no wedge wire screen 2 are provided in a lower portion of the material supply hopper 36.

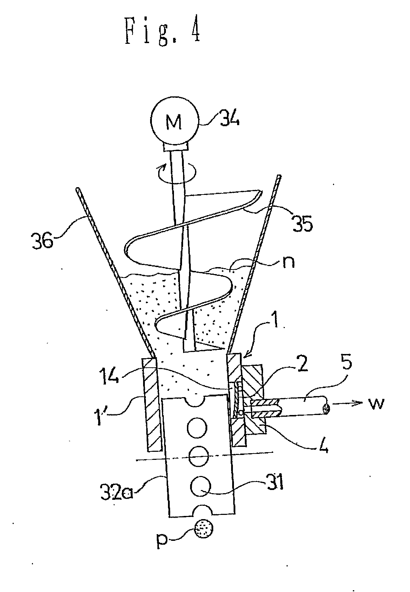

The cheek plates 1, 1' are provided to the introducing portion 33 of the paired left and right pressure rollers 32a, 32b to prevent side leakage of a material supplied by the material supply hopper 36. In this case, as shown in Fig. 4, the cheek plate 1 with the wedge wire screen 2 is provided behind the paired left and right pressure rollers 32a, 32b, whereas the cheek plate 1' with no wedge wire screen 2 is provided in front of the paired left and right pressure rollers 32a, 32b.

Further, a cover plate 4 is provided on the back surface of the cheek plate 1 with the wedge wire screen 2, and piping 5 coupled to with the drain outlet 14 of the cheek plate 1 with the wedge wire screen 2 is mounted in the cover plate 4. Liquid is drained though the piping 5. At the time of the drainage, the inside of the piping 5 is preferably depressurized using a vacuum source (such as a vacuum pump) for improvement in drainage efficiency.

When the paired left and right pressure rollers 32a, 32b are rotated in the arrow directions with a material such as gas hydrate slurry n containing moisture being supplied to the material supply hopper 36 as shown in Figs. 3 and 4, gas hydrate pellets p are formed by the dimples 31 formed in the circumferential surface of each of the paired left and right pressure rollers 32a, 32b, and the moisture contained in the gas hydrate slurry n is squeezed out toward the introducing portion 33 of the paired left and right pressure rollers 32a, 32b. This water w passes through the liquid passing slots 22 of the wedge wire screen 2 and is drained to the outside through the piping 5.

The above description has been given of the case of forming gas hydrate into pellets. Alternatively, the present invention may be applied to the granulation of pulverized coal, coke breeze, converter dust, metal abrasive powder, organic dry substance, nickel ore powder, or the like.

Further, the liquid passing slots 22 of the wedge wire screen 2 may extend horizontally. Further, the cheek plate 1 with the wedge wire screen 2 may be provided on both sides of the introducing portion 33. This allows a drastic increase in drainage speed and is thus preferable. Further, the provision of an unillustrated pressure sensor or temperature sensor in the introducing portion 33 allows feedback control (such as PID control) and is thus preferable.

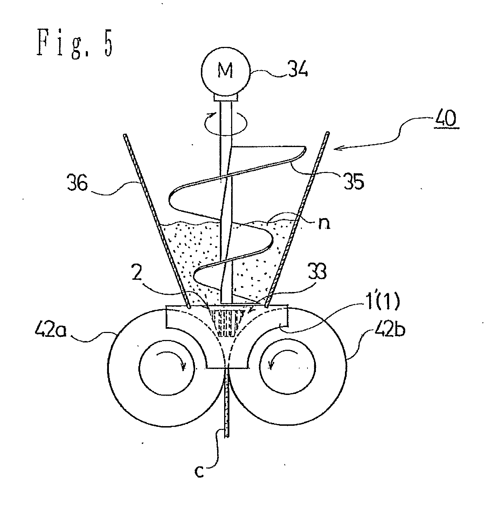

Meanwhile, the plate 1 with the wedge wire screen 2 can be applied to a compactor 40 as shown in Fig. 5. The compactor 40 is configured to make platy bodies c by using paired left and right pressure rollers 42a, 42b having flat circumferential surfaces with no dimple 31.
Note that, the same reference numerals are given to portions of the compactor 40 that are the same as those of the gas hydrate pellet manufacturing apparatus 30, and a detailed description thereof will be omitted.

### EXPLANATION OF REFERENCE NUMERALS

- 2: wedge wire screen
- 3: cheek plate
- 14: drain outlet
- 22: liquid passing slot

## Claims

1. A cheek plate equipped with a wedge wire screen, which is provided in any of front and rear of paired left and right pressure rollers and provided with a drain outlet facing a material introducing portion of the pressure rollers, **characterized in that** a wedge wire screen is provided on an inlet side of the drain outlet in such a way that a liquid passing slot of the wedge wire screen extends vertically or horizontally.

2. The cheek plate equipped with a wedge wire screen according to claim 1, **characterized in that** a wedge wire screen which has a liquid passing slot extending vertically or horizontally and which is curved in such a way as to be convex on a back side thereof is provided on the inlet side of the drain outlet.
